(19) Europäisches Patentamt
European Patent Office
Office européen des brevets

(11) EP 0 846 722 B1

(12) **EUROPÄISCHE PATENTSCHRIFT**

(45) Veröffentlichungstag und Bekanntmachung des Hinweises auf die Patenterteilung:
**17.04.2002 Patentblatt 2002/16**

(51) Int Cl.⁷: **C08K 5/54**, C08L 21/00

(21) Anmeldenummer: **97120535.6**

(22) Anmeldetag: **24.11.1997**

(54) **Reversionsarme Vernetzer**

Low reversion crosslinker

Agents de réticulation à faible réversion

(84) Benannte Vertragsstaaten:
**BE DE ES FR GB IT**

(30) Priorität: **06.12.1996 DE 19650633**

(43) Veröffentlichungstag der Anmeldung:
**10.06.1998 Patentblatt 1998/24**

(73) Patentinhaber: **BAYER AG**
**51368 Leverkusen (DE)**

(72) Erfinder:
- **Weidenhaupt, Hermann-Josef, Dr.**
  **50259 Pulheim (DE)**
- **Scholl, Thomas, Dr.**
  **51469 Bergisch Gladbach (DE)**
- **Königshofen, Heinrich, Dr.**
  **51465 Bergisch Gladbach (DE)**
- **Buding, Hartmuth, Dr.**
  **52445 Titz (DE)**
- **Hahn, Josef, Prof. Dr.**
  **50825 Köln (DE)**
- **Palloch, Petra**
  **51105 Köln (DE)**
- **Walter, Ellen**
  **50733 Köln (DE)**

(56) Entgegenhaltungen:
**EP-A- 0 670 347** **EP-A- 0 748 839**
**US-A- 4 517 336**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 846 722 B1

## Beschreibung

Die vorliegende Erfindung betrifft die Verwendung von Silanen der Formel (I) als Vernetzer zur Herstellung von reversionsarmen Kautschukvulkanisaten.

In der EP 670 347 A1 sind Kautschukmischungen beansprucht, die spezielle Verstärkungsadditive vom Typ der Formel (I) enthalten. Die Wirkung dieser Verstärkungsadditive wird anhand eines verbesserten Moduls, einer höheren Härte, eines verbesserten Abriebwiderstandes sowie eines günstigeren Verlustfaktors, gemessen bei 60°C, aufgezeigt. Die Verstärkungsadditive enthaltenden Kautschukmischungen eignen sich insbesondere für die Herstellung von Reifen, die einen günstigeren Rollwiderstand sowie eine gute Naßrutschfestigkeit und eine hohe Abriebfestigkeit aufweisen. An keiner Stelle in dieser Schrift wird ein möglicher Einsatz dieser Verbindungen als Vemetzer zur Herstellung von reversionsarmen Vulkanisaten offenbart oder nahegelegt.

In der EP 748 839 A1 werden spezielle Silane als Vemetzer zur Herstellung von reversionsarmen Vulkanisaten beansprucht. Die Verbindungen unterscheiden sich im Oligomerisierungsgrad. Gegenüber den Verbindungen der vorliegenden Patentanmeldung besitzen sie den Nachteil der höheren Rohstoffkosten und der schweren Zugänglichkeit durch die Verwendung größerer Mengen der silanhaltigen Komponente.

In DE-A 2 141 159, 2 141 160 und 2 255 577 sind bestimmte Organosilane beschrieben, die als Kieselsäureaktivator (Haftvermittler, Verstärkungsadditive) eingesetzt werden können. Aus Kautschuk + Gummi, Kunststoffe 34 (1981), Seiten 280 - 284 (S. Wolff) ist bekannt, daß diese Organosilane auch als Reversionsschutzmittel Verwendung finden können. Diese Organosilane weisen nur einen relativ kleinen Schwefelgehalt auf. Die mit diesen Silanen hergestellten Vulkanisate haben jedoch den Nachteil, daß sie bei einer Übervulkanisation, wie sie typischerweise bei der Herstellung von dickwandigen Gummiartikeln vorkommt, einen ungünstigeren Härteabfall sowie bei dynamischer Beanspruchung einen größeren Temperaturanstieg zeigen als die Silane (I) im Sinne der vorliegenden Erfindung (vgl. Beispiel 8).

Ein weiteres Verstärkungsadditiv (Kieselsäureaktivator) ist Thiocyanatopropyl-triethoxysilan, beschrieben in der Technical Information No. 6030.1 der Degussa AG von September 1995. Über eine Empfehlung dieser Verbindung als reversionsarmer Vernetzer ist uns nichts bekannt geworden. Nach eigenen Versuchen (vgl. Beispiel 1) lassen sich mit dieser Verbindung praktisch keine technisch ausreichend reversionsarme Vulkanisate erhalten.

Die Verbindung Mercaptopropyltrimethoxysilan wirkt ebenfalls als Verstärkungsadditiv und wird z.B. von der Fa. OSi International als Silan A 189 angeboten. Über eine Empfehlung dieser Verbindung als reversionsarmer Vernetzer ist uns ebenfalls nichts bekannt geworden. Nach eigenen Versuchen (vgl. Beispiel 1) lassen sich mit dieser Verbindung auch praktisch keine technisch ausreichend reversionsarme Vulkanisate erhalten. Das Beispiel 1 der vorliegenden Anmeldung zeigt also, daß der Einsatz von siliciumhaltigen Verstärkungsadditiven in Kautschukmischungen nicht grundsätzlich auch zu technisch relevanten reversionsstabilen Vulkanisaten führen muß.

Aus den Patentschriften DE 22 56 511 und DE 22 65 382 ist die allgemeine Verwendung von Polysulfid-Derivaten der Formel: [Beschleuniger-S-Sx-R-Sx-S-Beschleuniger] zur Herstellung von thermisch stabilen Vulkanisaten bekannt. In EP 0 385 072 B1, EP 0 385 073 B1, EP 0 432 405 B1 und EP 0 432 417 B1 werden reversionsarme Vernetzer mit Dithiocarbamylresten speziell für Reifenlaufflächen und -seitenwände beschrieben; in der EP 0 530 590 B1 wird ein Verfahren zur Herstellung von Dienkautschuk-Vulkanisaten mit derartigen Vernetzern offenbart. Die in solchen Vernetzern eingebauten Beschleunigerreste reichen mengenmäßig i.a. zur Beschleunigung der Vernetzung mit Schwefel nicht aus. Deshalb ist es notwendig, weitere Co-Beschleuniger anzuwenden. Durch diese Maßnahme schränkt sich der Compounder bei der Rezepturgestaltung, aus der letztlich die Verarbeitungssicherheit der Kautschukmischung sowie die technologischen Vulkanisateigenschaften resultieren, in unerwünschter Weise ein. Aus EP 0 432 406 B1, EP 0 432 416 B1 und EP-A 0 601 303 A1 sind analoge Vernetzer mit Hydroxy- bzw. Hydroxyaryl-dithiocarbonsäuregruppen sowie Alkylaryl-dithiocarbonsäure- bzw. Aryl-dithiocarbonsäuregruppen bekannt. Nachteilig für diese Substanzklassen sind jedoch die schlechten Ausbeuten bei der Synthese.

Ziel der vorliegenden Erfindung war, die thermische Belastbarkeit bei Herstellung und Gebrauch von Kautschukvulkanisaten zu verbessern sowie deren Neigung zur Reversion zu vermindern, bei guter Zugänglichkeit der hierfür notwendigen Vernetzer, ohne den Compounder in der Rezepturgestaltung durch den mit dem Vernetzer eingebrachten Beschleuniger einzuschränken. Dies wird mit den Silanen (I) der vorliegenden Erfindung erreicht.

Es wurde jetzt überraschender Weise gefunden, daß durch Verwendung von Silanen (I) Vulkanisate mit besonders geringerer Neigung zur Reversion und verbesserter thermischer Belastbarkeit erhalten werden können, so daß sich hieraus die Möglichkeit ergibt, Gummiartikel in kürzerer Zeit bei höherer Temperatur ohne Qualitätseinbußen herzustellen oder Gummiteile bei höheren Gebrauchstemperaturen über längere Zeit zu verwenden.

Gegenstand der vorliegenden Erfindung ist daher die Verwendung von mindestens einem Silan der Formel (I) als Vernetzer für Kautschukmischungen zur Erlangung von reversionsarmen Vulkanisaten

$$R^1R^2R^3\,Si\text{-}X^1\text{-}(\text{-}S_x\text{-}Y\text{-})_m\text{-}(\text{-}S_x\text{-}X^2\text{-}Si\,R^1R^2R^3)_n \quad \text{(I)},$$

worin in Formel (I)

| | |
|---|---|
| $R^1$, $R^2$ und $R^3$ | gleich oder verschieden sind und $C_1$-$C_{18}$-Alkyl, $C_1$-$C_{18}$-Alkoxi, $C_6$-$C_{14}$-Aryl oder -Aryloxi, $C_7$-$C_{18}$-Alkylaryl oder -Alkylaryloxi bedeuten, mit der Maßgabe, daß mindestens einer der Reste $R^1$ bis $R^3$ eine Alkoxi-, Aryloxi- oder Alkylaryloxigruppe ist, |
| $X^1$ und $X^2$ | gleich oder verschieden sind und für lineare, verzweigte oder cyclische, gegebenenfalls ungesättigte, $C_1$-$C_{12}$-Alkylenreste stehen, |
| Y | für gegebenenfalls mit $C_6$-$C_{12}$-Aryl-, $C_1$-$C_8$-Alkoxi- oder -Hydroxigruppen substituierte, lineare, verzweigte oder cyclische, gegebenenfalls ungesättigte, $C_1$-$C_{18}$-Alkylenreste steht, die gegebenenfalls durch Sauerstoff-, Schwefel- oder Stickstoffatome oder aromatische $C_6$-$C_{12}$-Gruppen unterbrochen sein können, sowie für $C_6$-$C_{12}$-Arylen- oder -Heteroarylengruppen, |
| m | für eine ganze Zahl von 21 bis 80 steht, bevorzugt 25 bis 40, |
| n | für eine ganze Zahl von 1 bis 6 steht, bevorzugt 1 bis 3, und |
| x | eine Zahl von 1 bis 12 bedeutet, bevorzugt 1 bis 6, |

wobei das Silan (I) in Mengen von 0,1 bis 15 Gew.-%, bevorzugt in Mengen von 0,5 bis 6 Gew.-%, bezogen auf die Menge des jeweils eingesetzten Kautschuks, eingesetzt wird.

Bevorzugte Vernetzer im Sinne der Erfindung zur Erlangung von reversionsarmen Vulkanisaten sind z.B. solche der Formel (I), worin $X^1$ und $X^2$ Methylen-, Ethylen-, Propylen-, Butylen-, Pentylen oder Hexylenreste, Y Methylen-, Ethylen-, Propylen-, Butylen-, Pentylen-, Hexylen-, Cyclohexylen-, Octylen-, Nonylen-, Decyclen-, Undecylen-, Dodecyclen-, Oxidiethylen-, Methylen-bis-(oxiethylen)-, Ethylen-bis-(oxiethylen)-, Thiodiethylen-, N-Methyl-N,N-diethylen- oder Reste, wie 1,2,3-Propyliden-, N,N,N-Triethylenoder 1,3,5-s-Triazinylreste, $R^1$, $R^2$ und $R^3$ in der Reihe der $C_1$ - $C_{18}$-Alkyl-Reste Methyl, Ethyl, Propyl, Butyl, Pentyl, Hexyl, in der Reihe der $C_1$ - $C_{18}$-Alkoxi-Reste Methoxy, Ethoxy, Propoxy, Butoxy, Pentoxy und Hexoxy, in der Reihe der $C_6$ - $C_{14}$-Aryl- oder -Aryloxireste Phenyl, Naphthyl, Anthracyl, Phenoxi und Naphthoxi, in der Reihe der $C_7$-$C_{18}$-Alkylaryl-Reste oder -Alkylaryloxi-Reste Tolyl und Xylyl, Methyl-Phenoxi, Dimethyl-Phenoxi und Ethyl-Phenoxi, darstellen. Die Silane (I) können sowohl als einzelne Verbindung mit einem definierten Molgewicht als auch als Oligomerengemisch mit einer Molgewichtsverteilung vorliegen. Aus verfahrenstechnischen Gründen ist es in vielen Fällen einfacher, ein Oligomeren- oder Polymerengemisch mit einer Schwefelkettenlängenverteilung herzustellen und anzuwenden. Die Verbindungen besitzen ein mittleres Molgewicht zwischen ca. 500 und 20 000, bevorzugt zwischen 1000 und 15 000, und eine Schwefelkettenlänge von 1 bis 12, bevorzugt 1 bis 6. Die bevorzugte mittlere Schwefelkettenlänge ist 2 bis 5.

Die Herstellung der Silane (I) ist bekannt und kann auf verschiedene Weise erfolgen (vgl. EP 670 347):

A: Durch Umsetzung von Mercaptogruppen-haltigen Silanen und Di- und/oder Polymercaptanen mit Schwefeldichlorid oder Dischwefeldichlorid unter Abspaltung von HCl. Die Reaktion kann in an sich bekannter Art und Weise bei Temperaturen von -30 bis +80°C, gegebenenfalls in Lösungsmitteln, wie Alkoholen oder aromatischen Kohlenwasserstoffen, durchgeführt werden:

$$R^1R^2R^3Si\text{-}X\text{-}SH + HS\text{-}Y\text{-}SH + S_xCl_2 \rightarrow$$

$$R^1R^2R^3Si\text{-}X\text{-}S_{x+2}(Y\text{-}S_{x+2})_m\text{-}X\text{-}SiR^1R^2R^3 + HCl$$

Zur Durchführung der Reaktion siehe z.B. Houben-Weyl, Methoden der organischen Chemie, Band 9, Seite 88 ff. (1955) und Band E 11 (1985), Thieme Verlag, Stuttgart.

B: In besonders vorteilhafter Weise gelingt die Herstellung der Verbindungen (I), wenn man Halogenalkylsilylether und Polyhalogenide mit Metallpolysulfiden in Gegenwart von alkoholischen Lösungsmitteln bei Temperaturen von -20 bis +120°C umsetzt:

$$R^1R^2R^3Si\text{-}X\text{-}Hal + Hal\text{-}Y\text{-}Hal + Na_2S_x \rightarrow$$

$$R^1R^2R^3Si\text{-}X\text{-}S_x(X\text{-}S_x)_m\text{-}X\text{-}SiR^1R^2R^3 + NaHal$$

Als Metallpolysulfide werden bevorzugt solche der Formel $Me_2S_x$ eingesetzt, in der Me für Lithium, Natrium oder Kalium steht und x eine Zahl von 2 bis 6 bedeutet.

Besonders bevorzugte Verbindungen (I) zur Verwendung als Vernetzer im Hinblick auf reversionsarme Vulkanisate entsprechen den Formeln:

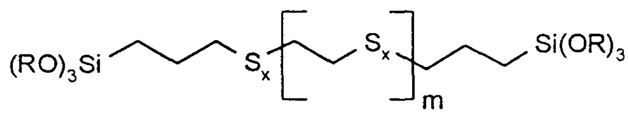

II,

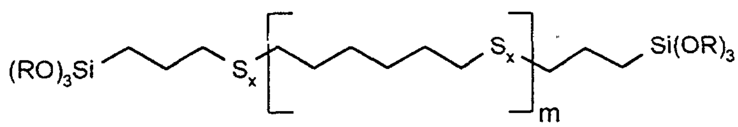

III,

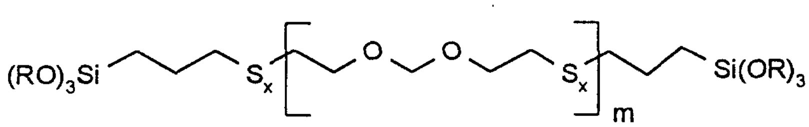

IV,

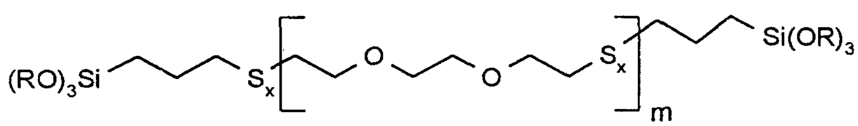

V,

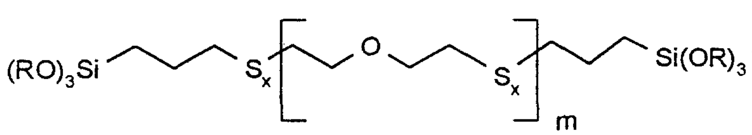

VI,

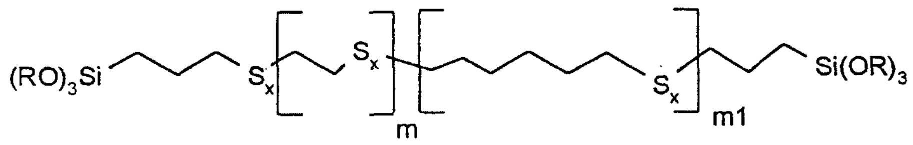

VII

worin

$R = CH_3, C_2H_5$,

x = 1 bis 12, bevorzugt 1 bis 6,

m = 21 bis 80, insbesonders 25 bis 40

$\Sigma$ m + $m_1$ = 22 bis 80

sowie

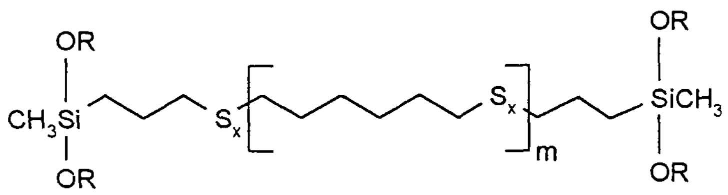

VIII,

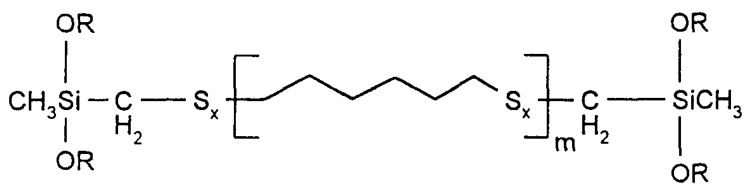

IX,

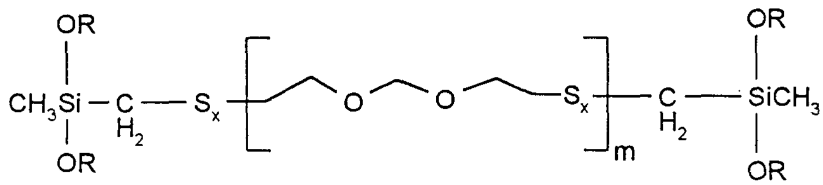

X,

worin

$R = CH_3, C_2H_5,$

x = 1 bis 12, bevorzugt 1 bis 6

m = 21 bis 80, bevorzugt 25 bis 40 ist.

Die Zugabe der Silane der Formel (I) sowie die Zugabe der Füllstoffe zum Kautschuk erfolgt bei Massetemperaturen von 100 bis 200°C, insbesondere bei 100 bis 160°C, sie kann jedoch auch später bei tieferen Temperaturen (40 bis 100°C) z.B. zusammen mit Kautschukhilfsmitteln erfolgen.

Die Silane (I) können sowohl in reiner Form als auch aufgezogen auf einem inerten organischen oder anorganischen Träger bzw. als Kombination von organischen und anorganischen Trägern dem Kautschuk-Mischprozeß zugegeben werden. Bevorzugte Trägermaterialien sind Kieselsäuren, natürliche oder synthetische Silikate, Aluminiumoxide/hydroxide oder Ruße. Desweiteren können die Silane (I) auch vordispergiert in Polymeren, z.B. in Ethylenvinylacetat-Copolymer, Ethylen-Propylen-(Dien)-Copolymer oder trans-Polyoctenamer, dem Mischprozeß zugesetzt werden.

Als Füllstoffe kommen für die erfindungsgemäßen Kautschukmischungen aktive als auch inaktive Füllstoffe in Frage, wie z.B.:

- Ruße. Die hierbei zu verwendenden Ruße sind nach dem Flammruß-, Furnaceoder Gasruß-Verfahren hergestellt und besitzen BET-Oberflächen von 20 bis 200 $m^2/g$, wie z.B. SAF-, ISAF-, IISAF-, HAF-, FEF- oder GPF-Ruße.
- Hochdisperse Kieselsäuren, hergestellt z.B. durch Fällung von Lösungen von Silikaten oder Flammenhydrolyse von Siliciumhalogeniden mit spezifischen Oberflächen von 5 bis 1 000, vorzugsweise 20 bis 400 $m^2/g$ (BET-Oberfläche) und mit Primärteilchengrößen von 100 bis 400 nm. Die Kieselsäuren können gegebenenfalls auch als Mischoxide mit anderen Metalloxiden, wie Al-, Mg-, Ca-, Ba-, Znund Ti-Oxiden vorliegen.
- Synthetische Silikate, wie Aluminiumsilikat, Erdalkalisilikate wie Magnesiumsilikat oder Calciumsilikat, mit BET-Oberflächen von 20 bis 400 $m^2/g$ und Primärteilchendurchmessern von 10 bis 400 nm.
- Natürliche Silikate, wie Kaolin und Wollastonit, und natürlich vorkommende Kieselsäuren, wie Diatomeenerde oder Kieselgur.
- Glasfasern und Glasfaserprodukte (Matten, Stränge) oder Mikroglaskugeln.
- Gemahlenes oder gefälltes Calciumcarbonat, Tonerde oder Quartzerde.
- Aluminium- und Magnesium-Hydroxide.

Die genannten Füllstoffe können alleine oder im Gemisch eingesetzt werden.

Die Silane (I) können zur reversionsarmen Vernetzung von Naturkautschuk als auch von Synthesekautschuken eingesetzt werden. Bevorzugte Synthesekautschuke sind beispielsweise bei W. Hofmann, Kautschuktechnologie, Gentner Verlag, Stuttgart 1980, beschrieben. Sie umfassen u.a.

| | |
|---|---|
| BR - | Polybutadien |
| ABR - | Butydien/Acrylsäure-$C_{1-4}$-alkylester-Copolymere |
| IR - | Polyisopren |
| SBR - | Styrol/Butadien-Copolymerisate mit Styrolgehalten von 1 bis 60, vorzugsweise 2 bis 50 Gew.-% |
| IIR - | Isobutylen/Isopren-Copolymerisate |
| NBR - | Butadien/Acrylnitril-Copolymere mit Acrylnitrilgehalten von 5 bis 60, vorzugsweise 10 bis 50 Gew.-% |
| HNBR - | teilhydrierter oder vollständig hydrierter Nitril-Kautschuk |
| EPDM - | Ethylen/Propylen/Dien-Copolymerisate |

sowie Verschnitte dieser Kautschuke.

Die Kautschukmischungen im Sinne der Erfindung können weitere Kautschukhilfsmittel enthalten wie Vulkanisationsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren wie Triethanolamin, Polyethylenglykol, Hexantriol, die der Gummiindustrie bekannt sind.

Die Kautschukhilfsmittel werden in üblichen Mengen, die sich unter anderem nach dem Verwendungszweck richten, eingesetzt. Übliche Mengen sind z.B. Mengen von 0,1 bis 50 Gew.-% bezogen auf Kautschuk.

Die Silane (I) können alleine als Vernetzer dienen. Es kann sich aber auch die Zugabe eines weiteren Vernetzers empfehlen. Als weitere bekannte Vernetzer können Schwefel oder Peroxide eingesetzt werden. Schwefel wird eingesetzt in Mengen von 0 bis 10 Gew.-%, bevorzugt in Mengen von 0 bis 7 Gew.-%, bezogen auf Kautschuk. Peroxide können in Mengen von 0 bis 7 Gew.-%, bevorzugt 0 bis 5 Gew.-%, bezogen auf Kautschuk, verwendet werden.

Beispiele für geeignete Vulkanisationsbeschleuniger sind Mercaptobenzthiazole, Mercaptobenzothiazol-sulfenamide, Guanidine, Thiurame, Dithiocarbamate, Thioharnstoffe und Thiocarbonate. Die Vulkanisationsbeschleuniger werden in Mengen von 0,1 bis 10 Gew.-%, bevorzugt 0,1 bis 5 Gew.-%, bezogen auf Kautschuk, eingesetzt.

Die Abmischung der Kautschuke mit dem Füllstoff, gegebenenfalls Kautschukhilfsmitteln und den Silanen (I) im Sinne der Erfindung kann in üblichen Mischaggregaten, wie Walzen, Innenmischern und Mischextrudern, durchgeführt werden.

Die Vulkanisation der Silane (I) enthaltenden Kautschukmischungen kann bei Temperaturen von 100 bis 200°C, bevorzugt 130 bis 180°C, gegebenenfalls unter Druck von 1 bis 200 bar erfolgen.

Die Silane (I) enthaltenden Kautschukmischungen eignen sich zur Herstellung von Formkörpern und Extrudaten, z.B. für die Herstellung von Kabelmänteln, Schläuchen, Treibriemen, Förderbändern, Walzenbelägen, Reifen, Schuhsohlen, Dichtungen und Dämpfungselementen.

**Beispiele**

**Beispiel 1** (Vergleichsbeispiel; Herstellung von Kautschukmischungen und Vulkanisaten)

Die folgenden Mischungen wurden innerhalb von 5 Minuten bei einer Massetemperatur von 140°C in einem Innenmischer hergestellt. Zum Schluß wurden auf einer Walze bei 50°C Schwefel, Beschleuniger und die Silane A 189 bzw. Si 264 zugemischt.

Tabelle 1

| | A | B | C |
|---|---|---|---|
| NR (Typ TSR 5, mastiziert) | 100 | 100 | 100 |
| Ruß N330 | 45 | 45 | 45 |
| Stearinsäure | 3 | 3 | 3 |
| Zinkoxid RS | 5 | 5 | 5 |
| 6PPD (Vulkanox® 4020/LG, Fa. Bayer) | 2 | 2 | 2 |
| Renopal® 450 (Fa. Fuchs) | 5 | 5 | 5 |
| Schwefel | 1,35 | 1,25 | 1,25 |
| CBS (Vulkacit® CZ, Fa. Bayer) | 1,4 | 1,4 | 1,4 |
| Mercaptopropyltrimethoxysilan (Silan A 189, Fa. OSi International) | 0 | 1 | 0 |
| Thiocyanatopropyltriethoxysilan (Silan Si 264, Fa. Degussa) | 0 | 0 | 1 |
| Höhe des Drehmoments nach 60 min bei 160°C (in Prozent vom Maximum) nach DIN 53 529 | 81 | 83 | 86 |

Das Vulkanisationsverhalten der Kautschukmischungen wurde anschließend in einem Monsanto-Rheometer MDR 2000 E nach DIN 53 529 bei 160°C untersucht. In der Tabelle 1 wird die Höhe des Drehmomentes nach 60 Minuten als Prozentangabe vom Maximum angegeben. Hohe Werte entsprechen daher reversionsstabilen Vulkanisaten, niedrige Werte stehen für weniger reversionsstabile Vulkanisate. Es wird deutlich, daß durch die Verwendung der Verstärkungsadditive Mercaptopropyltrimethoxysilan (Silan A 189) und Thiocyanatopropyltriethoxysilan (Silan Si 264) keine technisch ausreichend reversionsarmen Vulkanisate erhalten werden.

**Beispiel 2**

$$(EtO)_3Si\text{-}CH_2CH_2CH_2\text{-}S_4\text{-}[CH_2CH_2\text{-}O\text{-}CH_2\text{-}O\text{-}CH_2CH_2\text{-}S_4]_{32}\text{-}CH_2CH_2CH_2\text{-}Si(OEt)_3$$

160,9 g (2,06 mol) wasserfreies $Na_2S$ wurde mit 198,0 g (6,19 mol) Schwefel in einem Lösungsmittelgemisch aus 220 ml Ethanol und 900 ml Xylol Stunde zum Rückfluß erhitzt. Dann setzte man innerhalb von 30 Minuten 346,0 g (2 mol) Bis-(2-chlorethyl-)-formal unter Rückfluß zu und danach innerhalb weiterer 30 Minuten 30,1 g (0,125 mol)

3-Chlorpropyltriethoxisilan. Nach 6,5stündigem Nachrühren wurde über Nacht abgekühlt, filtriert und die Lösung im Vakuum eingedampft. Man erhielt 490 g (Ausbeute ca. 99 % der Theorie) eines braun-gelben Öls.

| Elementaranalyse: | | | | |
|---|---|---|---|---|
| | C | H | S | |
| ber. | 27,0 | 4,6 | 53,5 | % |
| gef. | 27,4 | 4,8 | 52,0 | % |

**Beispiel 3**

$$(EtO)_3Si\text{-}CH_2CH_2CH_2\text{-}S_4\text{-}[CH_2CH_2\text{-}CH_2CH_2\text{-}CH_2CH_2\text{-}S_4]_{32}\text{-}CH_2CH_2CH_2\text{-}Si(OEt)_3$$

Es wurde wie in Beispiel 2 verfahren. Dabei setzte man 160,7 g (2,06 mol) wasserfreies Natriumsulfid in 172 ml Ethanol und 772 ml Xylol mit 198 g (6,19 mol) Schwefel, 310,2 g (2,0 mol) 1,6-Dichlorhexan und 30,1 g (0,125 mol) 3-Chlorpropyltriethoxisilan um. Man erhielt 451 g (Ausbeute ca. 99 % der Theorie) eines braunen Öls.

| Elementaranalyse: | | | | |
|---|---|---|---|---|
| | C | H | S | |
| ber. | 34,4 | 5,8 | 57,7 | % |
| gef. | 34,7 | 6,2 | 57,6 | % |

**Beispiel 4**

$$(EtO)_3Si\text{-}CH_2CH_2CH_2\text{-}S_4\text{-}[CH_2CH_2\text{-}CH_2CH_2\text{-}CH_2CH_2\text{-}S_4]_{25}\text{-}CH_2CH_2CH_2\text{-}Si(OEt)_3$$

Es wurde wie in Beispiel 2 verfahren. Dabei setzte man 202,8 g (2,6 mol) wasserfreies Natriumsulfid in 217 ml Ethanol und 1098 ml Xylol mit 249,6 g (7,8 mol) Schwefel, 395,6 g (2,5 mol) 1,6-Dichlorhexan und 49,3 g (0,2 mol) 3-Chlorpropyltriethoxisilan um. Man erhielt 590 g (Ausbeute ca. 100 % der Theorie) eines braunen Öls.

| Elementaranalyse: | | | | |
|---|---|---|---|---|
| | C | H | S | |
| ber. | 34,5 | 5,9 | 57,0 | % |
| gef. | 34,7 | 6,3 | 55,5 | % |

**Beispiel 5**

$$(EtO)_3Si\text{-}CH_2CH_2CH_2\text{-}S_4\text{-}[CH_2CH_2\text{-}CH_2CH_2\text{-}CH_2CH_2\text{-}S_4]_{40}CH_2CH_2CH_2\text{-}Si(OEt)_3$$

Es wurde wie in Beispiel 2 verfahren. Dabei setzte man 159,9 g (2,05 mol) wasserfreies Natriumsulfid in 217 ml Ethanol und 1098 ml Xylol mit 196,8 g (6,15 mol) Schwefel, 316,5 g (2,0 mol) 1,6-Dichlorhexan und 24,7 g (0,10 mol) 3-Chlorpropyltriethoxisilan um. Man erhielt 438 g (Ausbeute ca. 97 % der Theorie) eines braunen Öls.

| Elementaranalyse: | | | | |
|---|---|---|---|---|
| | C | H | S | |
| ber. | 34,3 | 5,8 | 58,2 | % |
| gef. | 34,4 | 6,3 | 56,3 | % |

**Beispiel 6** (Herstellung von Kautschukmischungen und Vulkanisaten)

Die folgenden Mischungen wurden innerhalb von 5 Minuten bei einer Massetemperatur von 140°C in einem Innenmischer hergestellt. Zum Schluß wurden auf einer Walze bei 50°C Schwefel, Beschleuniger, Bis(triethoxysilyl-propyl)tetrasulfid sowie die Produkte der Beispiele 2 und 3 zugemischt.

Tabelle 2

| | D* | E* | F | G |
|---|---|---|---|---|
| NR (Typ TSR 5, mastiziert) | 100 | 100 | 100 | 100 |
| Ruß N330 | 45 | 45 | 45 | 45 |
| Stearinsäure | 3 | 3 | 3 | 3 |
| Zinkoxid RS | 5 | 5 | 5 | 5 |
| 6PPD (Vulkanox® 4020/LG, Fa. Bayer) | 2 | 2 | 2 | 2 |
| Renopal® 450 (Fa. Fuchs) | 5 | 5 | 5 | 5 |
| Schwefel | 1,35 | 1,15 | 0,8 | 0,8 |
| CBS (Vulkacit® CZ, Fa. Bayer) | 1,4 | 1,4 | 1,4 | 1,4 |
| Bis (triethoxysilyl-propyl)tetrasulfid gemäß DE-OS 2 255 577 | 0 | 1 | 0 | 0 |
| Verbindung gem. Bsp. 2 | 0 | 0 | 1 | 0 |
| Verbindung gem. Bsp. 3 | 0 | 0 | 0 | 1 |
| Höhe des Drehmoments nach 60 min bei 160°C (in Prozent vom Maximum) nach DIN 53 529 | 82 | 93 | 95 | 94 |

* Vergleichsbeispiel

Das Vulkanisationsverhalten der Kautschukmischungen wurde anschließend in einem Monsanto-Rheometer MDR 2000 E nach DIN 53 529 bei 160°C untersucht. In der Tabelle 2 wird die Höhe des Drehmomentes nach 60 Minuten als Prozentangabe vom Maximum angegeben. Hohe Werte entsprechen daher reversionsstabilen Vulkanisaten, niedrige Werte stehen für weniger reversionsstabile Vulkanisate: Es wird deutlich, daß durch dieVerwendung der Verbindungen im Sinne der Erfindung sichtbare Vorteile hinsichtlich der thermischen Belastbarkeit zu erzielen sind.

**Beispiel 7** (Herstellung von Kautschukmischungen und Vulkanisaten)

Es wurde wie in Beispiel 6 verfahren.

Tabelle 3

| | H* | I* | J | K | L |
|---|---|---|---|---|---|
| NR (Typ TSR 5, mastiziert) | 100 | 100 | 100 | 100 | 100 |
| Ruß N330 | 45 | 45 | 45 | 45 | 45 |
| Stearinsäure | 3 | 3 | 3 | 3 | 3 |
| Zinkoxid RS | 5 | 5 | 5 | 5 | 5 |
| 6PPD (Vulkanox® 4020/LG, Fa. Bayer) | 2 | 2 | 2 | 2 | 2 |
| Renopal® 450 (Fa. Fuchs) | 5 | 5 | 5 | 5 | 5 |
| Schwefel | 1,35 | 1,15 | 0,8 | 0,8 | 0,8 |
| CBS (Vulkacit® CZ, Fa. Bayer) | 1,4 | 1,4 | 1,4 | 1,4 | 1,4 |

* Vergleichsbeispiel

Tabelle 3 (fortgesetzt)

| | H* | I* | J | K | L |
|---|---|---|---|---|---|
| Bis (triethoxysilyl-propyl)tetrasulfid gemäß DE-OS 2 255 577 | 0 | 1 | 0 | 0 | 0 |
| Verbindung gem. Bsp. 3 | 0 | 0 | 1 | 0 | 0 |
| Verbindung gem. Bsp. 4 | 0 | 0 | 0 | 1 | 0 |
| Verbindung gem. Bsp. 5 | 0 | 0 | 0 | 0 | 1 |
| Höhe des Drehmoments nach 60 min bei 160°C (in Prozent vom Maximum) nach DIN 53 529 | 81 | 92 | 93 | 94 | 94 |

* Vergleichsbeispiel

Das Vulkanisationsverhalten der Kautschukmischungen wurde anschließend in einem Monsanto-Rheometer MDR 2000 E nach DIN 53 529 bei 160°C untersucht. In der Tabelle 3 wird die Höhe des Drehmomentes nach 60 Minuten als Prozentangabe vom Maximum angegeben. Hohe Werte entsprechen daher reversionssstabilen Vulkanisaten, niedrige Werte stehen für weniger reversionsstabile Vulkanisate: Es wird deutlich, daß durch die Verwendung der Verbindungen im Sinne der Erfindung sichtbare Vorteile hinsichtlich der thermischen Belastbarkeit zu erzielen sind.

**Patentansprüche**

**1.** Verwendung von mindestens einem Silan der Formel (I) als Vernetzer für Kautschukmischungen zur Erlangung von reversionsarmen Vulkanisaten

$$R^1R^2R^3Si - X^1 - ( - S_x - Y - )_m - ( - S_x - X^2 - SiR^1R^2R^3)_n \quad \text{(I),}$$

worin in Formel (I)

$R^1$, $R^2$ und $R^3$ gleich oder verschieden sind und $C_1$-$C_{18}$-Alkyl, $C_1$-$C_{18}$-Alkoxi, $C_6$-$C_{12}$-Phenyl oder -Phenoxi, $C_7$-$C_{18}$-Alkylaryl oder -Alkylaryloxi bedeuten, mit der Maßgabe, daß mindestens einer der Reste $R^1$ bis $R^3$ eine Alkoxi-, Phenoxi oder Alkylaryloxigruppe ist,

$X^1$ und $X^2$ gleich oder verschieden sind und für lineare, verzweigte oder cyclische, gegebenenfalls ungesättigte $C_1$-$C_{12}$-Alkylenreste stehen,

Y für gegebenenfalls mit $C_6$-$C_{12}$-Aryl-, $C_1$-$C_8$-Alkoxi- oder -Hydroxigruppen substituierte, lineare, verzweigte oder cyclische, gegebenenfalls ungesättigte, $C_1$-$C_{18}$-Alkylenreste steht, die gegebenenfalls durch Sauerstoff-, Schwefel- oder Stickstoffatome oder aromatische $C_6$-$C_{12}$-Gruppen unterbrochen sein können, sowie für $C_6$-$C_{12}$-Arylen- oder -Heteroarylengruppen,

m für eine ganze Zahl von 21 bis 80 steht,

n für eine ganze Zahl von 1 bis 6 steht und

x eine Zahl von 1 bis 12 bedeutet,

wobei das Silan (I) in Mengen von 0,1 bis 15 Gew.-%, bezogen auf die Menge des eingesetzten Kautschuks, eingesetzt wird.

**2.** Verwendung der Silane (I) nach Anspruch 1, **dadurch gekennzeichnet, daß** in Formel (I) m für eine ganze Zahl von 25 bis 40, n für eine ganze Zahl von 1 bis 3 und x für eine ganze Zahl von1 bis 6 steht.

## Claims

1. Use of at least one silane of formula (I) as a crosslinking agent for rubber compounds in order to obtain low-reversion vulcanised products

$$R^1R^2R^3Si\text{-}X^1\text{-}(\text{-}S_x\text{-}Y\text{-})M\text{-}(\text{-}S_x\text{-}X^2\text{-}SiR^1R^2R^3)_n \quad \text{(I)},$$

wherein in formula (I)

| | |
|---|---|
| $R^1$, $R^2$ and $R^3$ | are identical or different and denote a $C_{1-18}$-alkyl, a $C_{1-18}$-alkoxy, a $C_6$-$C_{12}$-phenyl or -phenoxy, or a $C_{7-18}$-alkylaryl or -alkylaryloxy group, with the proviso that at least one of the $R^1$ to $R^3$ radicals is an alkoxy, phenoxy or alkylaryloxy group, |
| $X^1$ and $X^2$ | are identical or different and represent linear, branched or cyclic $C_1$-$C_{12}$-alkylene radicals which are optionally unsaturated. |
| Y | represents linear, branched or cyclic $C_1$-$C_{18}$-alkylene radicals, which are optionally unsaturated and which are optionally substituted with $C_6$-$C_{12}$-aryl or with $C_1$-$C_8$-alkoxy or -hydroxy groups, and which can optionally be interrupted by oxygen, sulphur or nitrogen atoms or by aromatic $C_6C_{12}$ groups, and also represents $C_6$-$C_{12}$-arylene or -heteroarylene groups, |
| m | represents an integer from 21 to 80, |
| n | represents an integer from 1 to 6, and |
| x | denotes a number from 1 to 12, |

wherein the silane (I) is used in amounts of 0.1 to 15 % by weight with respect to the amount of rubber used.

2. Use of silanes (I) according to claim 1, **characterised in that** in formula (I) m represents an integer from 25 to 40, n represents an integer from 1 to 3 and x represents an integer from 1 to 6.

## Revendications

1. Utilisation d'au moins un silane de formule (I) en tant qu'agent réticulant pour des mélanges de caoutchouc en vue de parvenir à des vulcanisats à faible réversion :

$$R^1R^2R^3Si - X^1 - (- S_x - Y - )_m - ( - S_x - X^2 - SiR^1R^2R^3)_n \quad \text{(I)},$$

les symboles de la formule (I) ayant les significations suivantes :

| | |
|---|---|
| $R^1$, $R^2$ et $R^3$, | ayant des significations identiques ou différentes, représentent chacun un groupe alkyle en $C_1$-$C_{18}$, alcoxy en $C_1$-$C_{18}$, phényle ou phénoxy en $C_6$-$C_{12}$, alkylaryle ou alkylaryloxy en $C_7$-$C_{18}$, sous réserve que l'un au moins des symboles $R^1$ à $R^3$ représente un groupe alcoxy, phénoxy ou alkylaryloxy, |
| $X^1$ et $X^2$, | ayant des significations identiques ou différentes, représentent chacun un groupe alkylène linéaire, ramifié ou cyclique, éventuellement insaturé, en $C_1$-$C_{12}$, |
| Y | représente un groupe alkylène linéaire, ramifié ou cyclique, éventuellement insaturé, en $C_1$-$C_{18}$, portant éventuellement des substituants aryle en $C_6$-$C_{12}$, alcoxy en $C_1$-$C_8$ ou hydroxy, et qui peut le cas échéant être interrompu par des atomes d'oxygène, de soufre ou d'azote ou des groupes aromatiques en $C_6$-$C_{12}$, ou encore un groupe arylène en $C_6$-$C_{12}$ ou hétéroarylène en $C_6$-$C_{12}$, |
| m | est un nombre entier allant de 21 à 80, |
| n | est un nombre entier allant de 1 à 6, et |
| x | est un nombre allant de 1 à 12, |

le silane (I) étant mis en oeuvre en quantité de 0,1 à 15 % du poids du caoutchouc mis en oeuvre.

**2.** Utilisation des silanes (I) de la revendication 1, **caractérisée en ce que**, dans la formule (I), m est nombre entier allant de 25 à 40, n un nombre entier allant de 1 à 3 et x un nombre entier allant de 1 à 6.